# EUROPÄISCHE PATENTSCHRIFT

(11) **EP 4 519 615 B1**
(45) Veröffentlichungstag und Bekanntmachung des Hinweises auf die Patenterteilung: **25.02.2026**
(21) Anmeldenummer: 22830386.3
(22) Anmeldetag: 21.12.2022
(51) Int. Cl.: F24S 25/10, F24S 25/617, F24S 40/80, H02S 20/10

(54) **STURMFESTE PHOTOVOLTAIK ANLAGE**
STORMPROOF PHOTOVOLTAIC SYSTEM
SYSTÈME PHOTOVOLTAÏQUE RÉSISTANT AUX TEMPÊTES

(30) Priorität: 05.05.2022 AT 503162022
(43) Veröffentlichungstag der Anmeldung: 12.03.2025
(73) Patentinhaber: Kopetz, Hermann, 9201 Krumpendorf (AT)
(72) Erfinder: Kopetz, Hermann, 9201 Krumpendorf (AT)
(74) Vertreter: Patentanwaltskanzlei Matschnig & Forsthuber OG
(86) Internationale Anmeldenummer: PCT/AT2022/060455
(87) Internationale Veröffentlichungsnummer: WO 2023/212756

(56) Entgegenhaltungen:
- WO-A1-2016/042583
- DE-U1- 202010 003 834
- JP-A- 2013 053 479
- US-A- 6 060 658
- US-A1- 2010 065 104

## Beschreibung

Die Erfindung betrifft ein sturmfestes Bauwerk für den Einsatz in Höhenlagen, mit dem die Effizienz der Umwandlung der Strahlungsenergie der Sonne mittels Photovoltaik in elektrische Energie in den Wintermonaten verbessert wird.

### Kurze Beschreibung der Erfindung

Die Umwandlung der von der Sonne zur Erde gestrahlten Solarenergie in elektrische Energie spielt eine wesentliche Rolle in der Umstellung des Energiesystems von fossilen zu erneuerbaren Energiequellen. In einem Energiesystem, das auf fossile Energiequellen verzichtet, ist die elektrische Energie, die in Windanlagen und Photovoltaik (PV) Anlagen gewonnen wird, der zentrale Energieträger. Die Dokumente KR 101665400 B1, CN 213043637 U und KR 102232231 B1 zeigen Solaranlagen gemäß dem Stand der Technik.

Gegenwärtig wird die Mehrzahl der PV Anlagen auf den Dächern vorhandener Gebäude oder auf Freiflächen im Tal installiert. Die PV Anlagen sind so ausgerichtet, dass sie im Sommer die meiste Energie produzieren und in den Wintermonaten einen geringeren Wirkungsgrad aufweisen. Als Folge entsteht im Winter, wo zusätzliche elektrische Energie für den Betrieb der Wärmepumpen zur Heizung benötigt wird, eine elektrische Energielücke, die gegenwärtig durch das Verbrennen fossiler Brennstoffe geschlossen wird.

Die vorliegende Erfindung leistet einen Beitrag zur Schließung der Energielücke im Winter durch die Konzeption eine Bauwerks zur innovativen Aufstellung der PV-Paneele, die zu einer besseren Energieausbeute aus Solaranlagen in den Wintermonaten führt.

Pro Quadratmeter treffen im Mittel im Winter wie im Sommer ca. 1,3 kW Strahlung von der Sonne auf eine zur Solarstrahlung senkrechte Fläche. In unseren Breiten treffen die Sonnenstrahlen im Hochwinter unter einem mittleren Winkel von ca. 15 Grad auf die Erdoberfläche. Wenn die Solarpaneele waagrecht aufgestellt werden, so ergibt sich unter diesen Bedingungen eine wirksame Fläche von ca. 25 % des Solarpaneels, wenn hingegen die Solarpaneele senkrecht stehen, ist die wirksame Fläche im Hochwinter ca. 97 % des Solarpaneels. Bei einem Winkel von 70° beträgt der Wirkungsgrad im Hochwinter ca. 99 %. Bei einem Winkel von 70° und steiler ist auch sichergestellt, dass anfallender Schnee von den Paneelen abrutscht.

Im Winter ist in Tallagen an vielen Tagen Hochnebel, der die eintreffenden Sonnenstrahlen absorbiert. Wenn die PV Anlagen in den Bergen über der Nebelobergrenze aufgebaut werden, so wird auch an Tagen, an denen die PV Anlagen im Tal keine Leistung erbringen, von PV Anlagen im Gebirge elektrische Energie produziert.

Im Hochgebirge liegt im Winter von Mitte November bis Mitte April eine Schneedecke. Diese Schneedecke reflektiert die eintreffenden Sonnenstrahlen (Albedo Effekt) und führt zu einer Verbesserung des Wirkungsgrads einer PV Anlage, deren PV Paneele über der Schneedecke angeordnet sind. Die gemessene Steigerung des Wirkungsgrads durch den Albedo Effekt im Winter liegt bei ca. 20% bis 30%. Die vorliegende Erfindung nutzt die Albedo Strahlung durch die Anbringung von PV-Paneelen auf einer zur Schneedecke geneigten Nordseite.

Es gibt noch eine Anzahl weiterer Gründe, die für die Installation von PV Anlagen im Gebirge sprechen:
- Das solare Energieangebot ist im Gebirge höher als im Tal, da die Solarstrahlung durch die Atmosphäre, vor allem durch Nebel und Aerosole, vor dem Eintreffen auf die Solarzellen weniger abgeschwächt wird.
- Durch die tieferen Temperaturen im Gebirge wird der Wirkungsgrad von Solarzellen erhöht.
- Die Almflächen im Gebirge sind von geringerem landwirtschaftlichen und volkswirtschaftlichen Nutzen als die Flächen im Tal, die für die Produktion von Lebensmitteln benötigt werden.

Die große Herausforderung bei der Installation von PV Anlagen im Gebirge ist die Beherrschung der extremen Winde. Im Extremfall-beim Orkan Kyrill im Jänner 2007 - traten bei der Konkordiahütte in der Schweiz Windgeschwindigkeiten bis zu 225 km/h auf. In Lagen der Ostalpen, die nicht extrem positioniert sind, treten Windgeschwindigkeiten von mehr als 150 km/h nicht auf. Diese Windgeschwindigkeit von 150 km/h wird als Bezugsgröße für die Konstruktion des Bauwerks angenommen.

Bei den Windkräften unterscheidet man zwischen
(i) dem Druck auf die Bauteile
(ii) dem Druck auf das gesamte Bauwerk
(iii) den Reibungskräften, die vom Wind ausgelöst werden.

**Druck auf die Bauteile:** Die Außenhaut des vorgeschlagenen Bauwerks zur Umwandlung von Strahlungsenergie in elektrische Energie wird weitestgehend durch die Solarpaneele gebildet. Am Markt erhältliche Solarpaneele halten-bei entsprechender Montage- einem Außendruck von bis zu 6000 Pascal stand, das entspricht einem Flächendruck bei einer Windgeschwindigkeit von über 215 km/h. Wichtig ist jedoch, dass der Winddruck auf die Innenseite der PV-Paneele, der Innendruck, zu keiner Beschädigung der Verankerung des Solarpaneels führt.

**Druck auf das gesamte Bauwerk:** Der Gesamtdruck auf ein Bauwerk wird im Wesentlichen durch die Windgeschwindigkeit und die Größe der vom Wind angegriffenen Fläche bestimmt und führt zu einem Drehmoment, dem das Fundament standhalten muss. Da erfahrungsgemäß die höchste Windgeschwindigkeit eines Orkans aus Richtung Nord-West kommt, muss das Drehmoment des Fundaments in dieser Richtung dem Drehmoment, das durch einen Sturm auf das Bauwerk verursacht wird, entsprechen.

**Reibungskräfte, die durch den Wind verursacht werden:** Die Reibungskräfte hängen von der Rauigkeit der Oberflächen und der Form des Bauwerks ab. Ein kompaktes Bauwerk, wo die Bauteile stimmig miteinander verbunden sind (d.h. keines der beiden Bauteile einer Verbindung reicht über die Verbindungskante), bildet eine wesentlich geringere Angriffsfläche für den Wind als Verbindungen, die einen Überstand aufweisen.

Das geplante Bauwerk besteht aus einem kastenförmigen Paneel-Träger, der auf vier Säulen steht. Eine der beiden Breitseiten des Paneel-Trägers ist mit einem Winkel von ca. 70 Grad nach Süden ausgerichtet. Auf den vier Seiten des Paneel-Trägers können die PV Paneele montiert werden. An den Kanten des Bauwerks sind die Flächen stimmig miteinander verbunden.

Das Bauwerk ist so konstruiert, dass im Winter eine hohe Energieausbeute der Sonnenstrahlung erreicht wird. Die 70 Grad Neigung des Paneel-Trägers Richtung Süden führt in den Wintermonaten, wo die Sonne im Mittel ca. 20 Grad über dem Horizont steht, zu einem optimalen Energieertrag der auf der Südseite des Paneel-Trägers montierten PV Paneele. Die auf der Nordseite des Paneel-Trägers montierten PV-Paneele, die mit 20 Grad zur Horizontalen geneigt sind, wandeln im Winter die durch den Albedo-Effekt des Schnees reflektierten Sonnenstrahlen in elektrische Energie um.

Ein Solarpaneel wandelt ca. 20 % der Strahlungsenergie der Sonne in elektrische Energie um, die verbleibenden 80% der Strahlungsenergie werden in der Form von Wärme an das Paneel abgegeben. Das Paneel erwärmt sich und die umgebende Luft im Inneren und Äußeren des Paneel-Trägers. Der auf allen Seiten abgeschlossene Innenraum des Paneel-Trägers wirkt wie ein Kamin zur Ableitung der erwärmten Luft nach oben. Die kalte Luft tritt durch ein Sturmgitter auf der Unterseite des Paneel-Trägers ein und steigt, aufgrund der Erwärmung nach oben, wo sie durch weitere Sturmgitter nach außen fließt. Durch diese Konstruktion wird verhindert, dass sich die Paneele stark erwärmen, was zu einer Reduktion des Wirkungsgrades der Paneele führen würde.

Die Konstruktion des Bauwerks verhindert, dass ein Sturm direkt auf die Rückseite eines PV-Paneels trifft und dieses aus der Verankerung reißt. Die auf der Oberseite und Unterseite des Paneel-Trägers montierten Sturmgitter reduzieren einerseits die Sturmkräfte innerhalb des Paneel Trägers und ermöglichen andererseits einen Luftstrom zur Ableitung der in den PV-Paneelen entstehenden Wärme.

Bei der Konzeption des vorgestellten Bauwerks zur PV Energiegewinnung sind neben den diskutierten mechanischen und thermischen auch ökologische Aspekte berücksichtigt worden. Es ist vorgesehen, das Traggerüst des Bauwerks, das die Solarpaneele trägt, vornehmlich aus Holz zu bauen. Holz ist ein natürlicher Baustoff, der das aus der Luft aufgenommene CO₂ enthält. Eine Verwendung von Holz in einem Bauwerk bindet das CO₂ über Jahrzehnte und dient somit als natürliche CO₂ Senke. Der Freiraum von ca. 3m zwischen der Erdoberfläche und der Unterkante des Paneel-Trägers **100** wird im Winter teilweise vom Schnee gefüllt. Im Sommer kann dieser Freiraum als Weide genutzt werden oder die Artenvielfalt durch die Anpflanzung von Hecken unterstützt werden.

Erfindungsgemäß ist auf dem Paneel-Träger eine Dachkonstruktion aufgesetzt. Dadurch wird die Energieausbeute weiter gesteigert und der Innenraum des Paneel-Trägers vor Regen geschützt, was die Haltbarkeit einer Holzkonstruktion erhöht.

### Umweltpolitische Bedeutung der Erfindung

Im Erneuerbaren-Ausbau-Gesetz (EAG) der österreichischen Bundesregierung aus dem Jahr 2021 ist in § 4 vorgesehen, bis zum Jahre 2030 die Stromerzeugung aus Photovoltaik um 11 TWh zu steigern. Nimmt man die in Tabelle 1 angeführte Verteilung des PV Energieertrags über den Jahresverlauf als Basis so werden bei 1 TWh PV Energie im Hochwinter bei herkömmlichen Anlagen 150 GWh, bei dem beschriebenen Bauwerk hingegen 300 GWh elektrische Energie produziert.

**Tab. 1: PV Ertrag in Jahresverlauf**

| Ertrag in % | PV auf Dächern und PV Frei-Anlagen im Tal | Beschriebenes PV-Bauwerk im Gebirge |
|---|---|---|
| Hochwinter (Nov, Dez, Jan, Feb | 15% | 30 % |
| Übergangszeit (Mrz, Apr, Aug, Sept | 30 % | 35 % |
| Sommer (Mai,Jun, Jul, Aug) | 55% | 35 % |

Die Erzeugung von 150 GWh elektrischer Energie mittels Gas verursacht Emissionen von ca 75 000 t CO₂, die durch das beschriebene Bauwerk vermieden werden.

Wenn angenommen wird, dass der mittels des Bauwerks produzierte PV-Strom im Sommer wie im Winter ca. gleich viel kostet und als Alternative der Winterstrom durch die Verstromung von grünem Wasserstoff erzeugt werden muss, der im Sommer produziert wird, so ist die Winterstromerzeugung dieses Bauwerks um mehr als 300 % kostengünstiger als die Verstromung von grünem Wasserstoff.

In Österreich gibt es ca. 10 000 km2 an wenig produktiven Flächen im Gebirge. Wenn das beschriebene Bauwerk auf weniger als 5 % dieser Flächen, die im Rahmen einer Umweltprüfung für die Gewinnung von Solarenergie als Solarpark gewidmet werden, aufgebaut wird, könnte der gesamte Winterstrombedarf in Österreich gedeckt werden. Da das Bauwerk die dritte Dimension nützt, könnten die Flächen des Solarparks, d.s. die Almflächen, weiter in der gewohnten Form bewirtschaftet werden.

### Prior Art

Bei einer Recherche wurden folgende Patente und Patentanmeldungen gefunden, die eine senkrechte Aufstellung von Solarpaneelen zum Inhalt haben.
D1: US 2019020300 A1 (IVERSEN BRIAN) 17. Januar 2019 (17.01.2019)
D2: CN 110719061 A (NANJING TANGYI INFORMATION TECH CO LTD) 21. Januar 2020 (21.01.2020)
D3: KR 20130123521 A (OH MYEONG GONG) 13. November 2013 (13.11.2013)
D4: JP 2014093383 A (HASEGAWA TAKAHIRO) 19. Mai 2014 (19.05.2014)
D5: JP 2012019185 A (SONY CORP) 26. Januar 2012 (26.01.2012)
D6: US 6060658 A (YOSHIDA HITOSHI, FUJII TAKASHI) 09. Mai 2000 (09.05.2000
D7: IT MI20120487 A1 (FERLA LODIGIANI LINO) 28. September 2013 (28.09.2013)
D8: JP 2015046540 A (SANYO ELECTRIC CO) 12. März 2015 (12.03.2015)

Dokument D1, das als eine Beschreibung des nächstliegenden Standes der Technik betrachtet wird, stellt die Anordnung von vertikal nach außen gerichteten Solarpaneelen, die übereinander entlang einer Säule angebracht sind, dar. Aus den vielen Ecken und Kanten der Abbildungen von D1 geht hervor, dass die Windproblematik in der vorgeschlagenen Anordnung nicht berücksichtigt wird. Dies gilt auch für die Dokumente D2 bis D5, die Haltemechanismen für Solarpaneele vorstellen, jedoch die möglichen Angriffspunkte eines Sturmes im Gebirge nicht berücksichtigen. Auch keines der Dokumente D6 bis D8 setzt sich mit der Problematik der windgerechten Fixierung der Solarpaneele, die Gegenstand der vorliegenden Anmeldung ist, auseinander.

Bei einer weitere Recherche wurden folgende Dokumente gefunden:
**D1':** JP 2007103806 A (NTT FACILITIES INC) 19. April 2007
**D2':** DE 202015100776 U1 (SOLARINVERT GMBH) 26. Februar 2015
**D3':** WO 2016042583 A1 (FRONTERRE ROBERTO) 24. März 2016
**D4':** DE 102019130374 A1 (WAS WIRTSCH MARTIN SCHROEDER GMBH) 1-1112. Mai 2021
**D5':** DE 20100511 U1 (WOLFRUM MARIO) 02. August 2001
**D6':** KR 101512093 B1 (OH MYEONG GONG) 14. April 2015 (
**D7':** WO 2021152466 A1 (DEWAN MOHAN RAJKUMAR)
**D8':** KR 20180112358 A (LEE WAN HO) 12. Oktober 2018
**D9':** WO 2013100283 A1 (OH MYEONG GONG) 04. Juli 2013

D1' beschreibt ein zylindrische säulenartige Vorrichtung zur Beleuchtung der Umwelt mit Energie, die über PV Paneele erzeugt wird-im Wesentlichen eine PV betriebene Straßenlaterne. Die windfeste Vorrichtung verfügt über ein Fundament, eine Batterie und eine Uhr, mit der die Beleuchtung geschaltet werden kann.

D2' beschreibt einen Energieturm zur Stromerzeugung, das ist ein Turm, auf dessen Seiten PV Paneele montiert sind und auf dem eine Windturbine mit vertikaler Rotationsachse zur Stromerzeugung installiert ist.

D3' beschreibt einen abgekappten Turm, auf dessen Seiten von oben bis unten PV Paneele montiert sind und dessen Oberfläche mit einem Winkel zwischen 1 Grad und 65 Grad geneigt ist. Die im Turm entstehende Wärme wird über Ventilationsöffnungen abgeführt.

D4' beschreibt die Anbringung von PV Paneelen auf einen bestehenden Turm einer Windenergieanlage.

D5' beschreibt ebenfalls die Anordnung von PV Paneelen auf den Turm einer bestehenden Windenergieanlage.

D6' beschreibt eine turmförmige hybride Energieanlage, die eine Windturbine und PV Paneele zur Stromerzeugung umfasst.

D7' beschreibt ebenfalls die Anordnung von PV Paneelen auf den Turm einer Windenergieanlage, ähnlich wie D4' und D5'.

D8' beschreibt eine hybride turmförmige Energieanlage zur Erzeugung von Energie mittels PV Paneele und einer Windturbine, die ein Gebäude mit Energie versorgt.

D9' beschreibt ebenfalls eine hybride turmförmige Energieanlage zur Erzeugung von Energie mittels PV Paneele und einer Windturbine. Die PV Paneele und die Windturbine sind am oberen Ende des Turms in der Form eines Regenschirms angeordnet.

Keine der zitierten Patentschriften beschreibt den Aufbau einer für den Winterbetrieb optimierten kastenförmigen PV Anlage mit einer schlanken Schmalseite und einer ausgedehnten Breitseite, die dem flachen Sonnengang im Hochgebirge angepasst ist und den Albedo Effekt nutzt, die Stürme bis 150 km/ toleriert und deren PV Paneele höher angeordnet sind als über die in den Bergen im Winter zu erwartende Schneelage.

### Erklärung von verwendeten Begriffen

Im Folgenden wird die angenommene Bedeutung von wichtigen Begriffen, die in der folgenden Beschreibung verwendet werden, dargelegt.
**Bauwerk:** ist jedes durch menschliche Tätigkeit mit einem Grundstück verbundene Werk unabhängig von seinem Zweck oder Betretbarkeit durch Menschen. z.B.: Häuser, Strommasten, Dämme, Straßen, Kanäle, Brücken.
**Hochwinter:** Der Hochwinter umfasst die Monate November, Dezember, Jänner und Februar.
**Paneel-Träger:** Ein kastenförmiger Bauteil-ein Quader-, auf dessen senkrechten Seiten PV-Paneele montiert werden können. Der Paneel-Träger hat zwei Breitseiten, zwei Schmalseiten, eine Oberseite und eine Unterseite. Der Paneel-Träger steht auf vier Säulen, die in einem Fundament verankert sind.
**PV-Paneel:** Ein flacher Bauteil, im dem die Solarzellen zur Umwandlung von Sonnenstrahlung in elektrische Energie enthalten sind. PV-Paneele werden in verschiedenen Dimensionen am Markt angeboten. Im folgenden Beispiel werden PV Paneele mit einer Dimension von 1m x 2m und 1m x 1,4 m und einer maximalen elektrischen Leistung (Wp) von je ca. 500 bzw. 350 Watt eingesetzt.
**Solarwinkel:** Der Winkel 105 zwischen der Horizontalen und der nach Süden ausgerichteten Breitseite des Paneel-Trägers.
**Stimmige Verbindung von Bauteilen:** Zwei Bauteile sind stimmig miteinander verbunden, wenn keine der beiden Bauteile über die Verbindungskante reicht.
**Sommer:** Der Sommer umfasst die Monate Mai, Juni, Juli und August.
**Sturmgitter:** Ein Sturmgitter ist ein flacher Bauteil (z.B., ein Geflecht oder ein Lochplatte) der einerseits die Sturmkräfte auf der dem Sturm abgewandten Fläche des Bauteils reduziert und andererseits einen Luftstrom durchlässt.
**Übergangszeit:** Die Übergangszeit umfasst die Monate September, Oktober, März und April.
**Überstand der Überdachung:** Der Teil einer Dachkonstruktion, der über den Baukörpers hinausreicht.

### Kurze Beschreibung der Zeichnungen

Fig. 1a - c zeigen den Aufriss einer typischen Realisierung des Bauwerks aus verschiedenen Himmelrichtungen.
Fig. 2 zeigen Dachkonstruktionen des Bauwerks im Aufriss.

### Detaillierte Beschreibung der Erfindung

Im Folgenden wird eine der vielen möglichen Realisierungen der Erfindung im Detail am Beispiel eines Bauwerks mit 44 Solarpaneelen beschrieben. In diesem Beispiel wird angenommen, dass die Mehrzahl der PV-Paneele die Maße von ca. 1 m Breite und ca. 2 m Höhe hat und eine Leistung von 500 Wp aufweist. Auf einem freien sonnigen Standort im Gebirge wird der Jahresenergieertrag eines solchen Bauwerks auf ca. 19 MWh geschätzt.

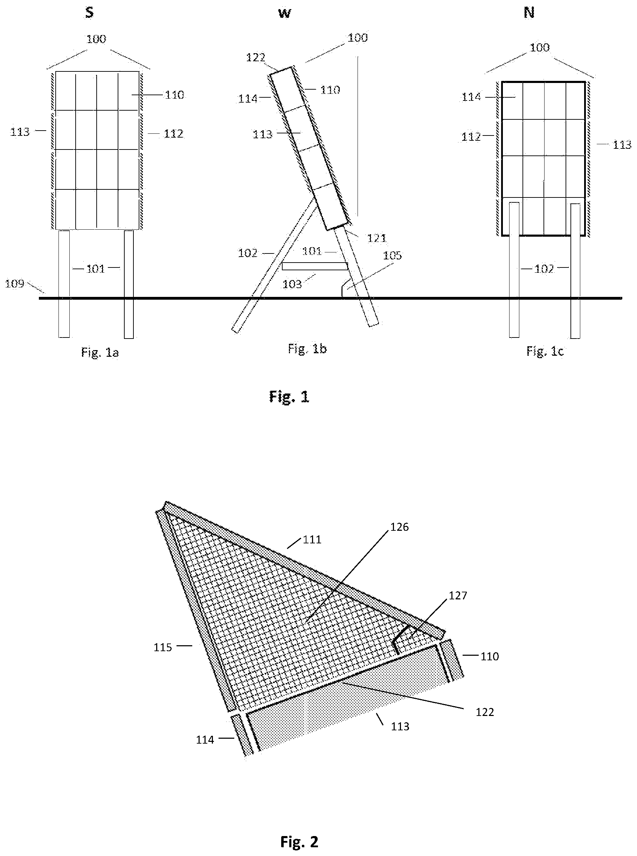

Das freistehende Bauwerk der **Fig. 1** zur Umwandlung der Strahlungsenergie der Sonne mittels Photovoltaik in elektrische Energie besteht aus einem kastenförmigen Paneel-Träger **100,** der auf zwei Süd-Säulen **101** und zwei Nord-Säulen **102** steht. Die nach Süden ausgerichtete Breitseite des Paneel-Trägers **100** ist mit dem Solarwinkel **105**-im Beispiel 70 Grad- zur Sonne geneigt.

**Fig. 1a** zeigt den Aufriss des Bauwerks aus südlicher Sicht. Auf dem Paneel Träger **100** sind auf der Südseite vier Reihen von jeweils vier PV-Paneele **110** befestigt. Auf der West Seite des Paneel-Trägers **100** sind die vier PV-Paneele **113** und auf der Ostseite die vier PV-Paneele **112** seitlich zu sehen. Die Süd-Säulen **101** sind in einem Fundament im Erdreich **109** verankert.

**Fig. 1b** zeigt den Aufriss des Bauwerks aus westlicher Sicht. Auf der West Seite des Paneel-Trägers **100** sind die vier PV-Paneele **113** befestigt. Die beiden Süd-Säulen **101** bilden das Skelett des Paneel Trägers **100,** das durch die beiden Nord-Säulen **102** gestützt wird. Im Beispiel ist der Winkel zwischen der Süd-Säule **101,** die mit dem Solarwinkel **105** von 70 Grad zur Sonne geneigt ist, und der entsprechenden Nord-Säule **102 45** Grad. Auf der Unterseite **121** des Paneel-Trägers **100** ist ein Sturmgitter montiert, ebenso auf der Oberseite **122** des Paneel-Trägers. Die beiden Sturmgitter reduzieren einerseits auftretende Windkräfte im Inneren des Paneel-Trägers **100** und ermöglichen andererseits den Eintritt eines Luftstroms in das Innere des Paneel-Trägers auf der Unterseite (Sturmgitter auf der Öffnung **121)** und den Austritt des erwärmten Luftstroms auf der Oberseite des Paneel-Trägers **100** (Sturmgitter auf der Öffnung **122).** Der Verbindungsbalken **103** erhöht die statische Festigkeit der Konstruktion.

Die Ansicht des Bauwerks aus östlicher Richtung entspricht spiegelverkehrt der **Fig. 1b****.**

Im Hochwinter ist aufgrund des Sonnengangs die Ergiebigkeit der PV-Paneele auf der Ostseite und der Westseite des Bauwerks sehr eingeschränkt. Aus diesem Grund wird für das Bauwerk eine Kastenform mit einer ausgedehnten Breitseite nach Süden (Sonne) und Norden (Albedo) und einer schlanken Schmalseite nach Ost und West gewählt. Die Schmalseite nach West reduziert auch die Angriffsfläche eines aus dem Westen kommenden Sturms.

**Fig. 1c** zeigt den Aufriss des Bauwerks aus nördlicher Richtung. Die nördliche Breitseite des Paneel-Trägers **100** ist mit dem Solarwinkel **105** zur Erdoberfläche geneigt. Damit wird erreicht, dass die Albedo-Reflexionen der Schneedecke im Winter erfasst und von den Paneelen **114** auf der Nordseite zu elektrischer Energie transformiert werden. Wenn das Bauwerk im Tal aufgestellt wird, wo wenig Schnee und daher ein geringer Albedo-Effekt erwartet werden, können die PV Paneele **114** wegfallen und es kann die Nordseite des Bauwerks mit Kletterpflanzen begrünt werden.

Alle Bauteile des Bauwerks sind stimmig ohne Überstand miteinander verbunden damit ein Sturm keine unnötigen Angriffsflächen vorfindet.

Die Säulen **101** und **102,** die den Paneel-Träger **100** tragen und dem Bauwerk Stabilität verleihen, können aus Holz, Beton oder Stahl gefertigt und in einem Betonfundament oder einem verdichteten Schotterfundament verankert sein.

Fig. 2 zeigt die Westansicht der Dachkonstruktion, die auf die Oberseite **122** des Paneel-Trägers **100** aufgesetzt wird. Die Dachkonstruktion schützt den Innenraum des Paneel-Trägers **100** vor Regen. Die Dachkonstruktion besteht auf der Südseite aus vier PV Paneelen **111** mit der Dimension von 1 x 1,4 m, und zwei auf der Nordseite waagrecht montierten Paneelen **115** mit der Dimension von 1 x 2 m, die die Verlängerung der Nordseite des Paneel-Trägers **100** bilden. Der Winkel **127** zwischen den PV Paneelen **111** und der Oberseite des Paneel-Trägers **100** beträgt im Beispiel 45 Grad. Um einem Sturm wenig Angriffsflächen zu bieten ist die Überdachung ohne Überstand mit dem Paneel-Träger verbunden.

Im Osten und im Westen der Dachkonstruktion ergeben sich zwei dreieckige Öffnungen **126,** die mit einem Sturmgitter abgedeckt sind. Durch diese Öffnungen **126** fließt im Normalfall der thermische Luftstrom aus dem Inneren des Paneel-Trägers **100.** Es ist hervorzuheben, dass ein Sturm der aus Westen auf das Bauwerk einwirkt, durch das im Westen befindliche Sturmgitter mit geschwächter Kraft in den Innenraum des Paneel-Trägers **100** eindringt und diesen Innenraum durch das im Osten befindliche Sturmgitter verlässt. Ein direkter Angriff eines Sturms auf die Rückseite der am Paneel-Träge **100** befestigten PV-Paneele, durch den die PV Paneele aus ihrer Verankerung gerissen werden könnten, ist durch diese Dachkonstruktion ausgeschlossen.

Tabelle 2 zeigt, welche jährliche Energieproduktion von dieser Beispielskonstruktion, die auf einem sonnigen Standort in einer Höhenlage errichtet ist, erwartet werden kann.

**Tab. 2: Geschätzte Energieproduktion/Jahr des Beispiel-Bauwerks.**

| Seite | Anzahl von PV Paneelen | Leistung in kWp | Vollast-Stunden/Jahr | Energieausbeute/ Jahr in MWh |
|---|---|---|---|---|
| Süd | 20 | 9,4 | 1400 | 13,2 |
| Ost (West) | 4+4 | 4 | 800 | 3,2 |
| Nord | 16 | 8 | 350 | 2,8 |
| Summe | | 21,4 | | 19,2 |

## Patentansprüche

1. Freistehendes Bauwerk, auf welchem Solarpaneele zur Umwandlung der empfangenen Strahlungsenergie der Sonne in elektrische Energie befestigt sind, wobei das Bauwerk aus einem kastenförmigen Paneel-Träger (100) mit einer, insbesondere ausgedehnten, Breitseite und einer, insbesondere schlanken, Schmalseite besteht, dessen eine Breitseite mit einem Solarwinkel (105) zur Horizontalen von vornehmlich 70 Grad nach Süden zur Sonne geneigt ist, und dessen andere Breitseite mit einem Solarwinkel (105) von vornehmlich 70 Grad nach Norden zur Schneedecke bzw. Erde geneigt ist und wo der Paneel-Träger (100) auf vier Säulen steht, die eine Mindesthöhe aufweisen, welche vorzugsweise höher ist als die maximale Schneelage, die im Winter erwartet wird, und wo die Neigung der zwei südlichen Säulen (101) dem Solarwinkel (105) entspricht und wo der Winkel in der Fläche parallel zur Schmalseite des Paneel-Trägers (100) zwischen einer nördlichen Säule (102) und der entsprechenden südlichen Säule (101) vorzugsweise 45 Grad beträgt, und wo die vier Säulen in einem Fundament verankert sind und wo auf der Südseite des Paneel-Trägers PV-Paneele (110), auf der Ostseite PV-Paneele (112), und auf der Westseite PV-Paneele (113) befestigt sind, und wobei optional auf der Nordseite PV-Paneele (114) befestigt sind, und wo die zwei Schmalseiten und die zwei Breitseiten des Paneel-Trägers ohne Überstände miteinander verbunden sind und wo die Öffnungen auf der Unterseite (121) und der Oberseite (122) des Paneel-Trägers mit einem luftdurchlässigen Sturmgitter abgeschlossen sind, wobei auf der Oberseite des Paneel-Trägers (100) eine Dachkonstruktion aufgesetzt ist, die aus nach Süden zur Sonne ausgerichteten PV Paneelen (111) und aus den nordseitigen Paneelen (115) besteht, und wo die auf der Ost- und der Westseite vorhandenen dreieckigen Öffnungen (126) mit einem luftdurchlässigen Sturmgitter abgeschlossen sind.

2. Freistehendes Bauwerk nach Anspruch 1, **dadurch gekennzeichnet, dass** die Säulen (101) und (102) aus Holz, Beton oder Stahl gefertigt sind.

3. Freistehendes Bauwerk nach Anspruch 1 oder 2, **dadurch gekennzeichnet, dass** die Säulen (101) und (102) in einem Betonfundament verankert sind.

4. Freistehendes Bauwerk nach Anspruch 1 oder 2, **dadurch gekennzeichnet, dass** die Säulen (101) und (102) in einem verdichteten Schotterfundament verankert sind.

5. Freistehendes Bauwerk nach einem oder mehreren der Ansprüche 1 bis 4,
**dadurch gekennzeichnet, dass** die Überdachung ohne Überstand mit dem Paneel-Träger (100) verbunden ist.

6. Freistehendes Bauwerk nach einem oder mehreren der Ansprüche 1 bis 5,
**dadurch gekennzeichnet, dass** über vorhandenen Öffnungen des Innenraums des Paneel-Trägers (100) Sturmgitter angebracht sind, sodass der Winddruck im Innenraum des Bauwerks reduziert wird.

7. Freistehendes Bauwerk nach einem oder mehreren der Ansprüche 1 bis 6,
**dadurch gekennzeichnet, dass** die Breitseite mindestens 2 mal so lang wie die Schmalseite, insbesondere mindestens 3 mal oder mindestens 4 mal so lang, vorzugsweise genau 4 mal so lang, ist.

8. Freistehendes Bauwerk nach einem oder mehreren der Ansprüche 1 bis 7,
**dadurch gekennzeichnet, dass** die Mindesthöhe 2 Meter oder 3 Meter beträgt.

## Claims

1. Free-standing structure on which solar panels are mounted for converting the solar radiation energy received into electrical energy, wherein the structure comprises a box-shaped panel support (100) with one, in particular extended, wide side and a narrow side, which is particularly slender, one wide side of which is inclined at a solar angle (105) of primarily 70 degrees to the horizontal towards the south and the sun, and the other wide side of which is inclined at a solar angle (105) of primarily 70 degrees to the north towards the snow cover or the ground, and where the panel support (100) stands on four pillars that have a minimum height that is preferably higher than the maximum snow depth expected in winter, and where the inclination of the two southern pillars (101) corresponds to the solar angle (105) and where the angle in the area parallel to the narrow side of the panel support (100) between a northern pillar (102) and the corresponding southern pillar (101) is preferably 45 degrees, and where the four pillars are anchored in a foundation and where PV panels (110) are mounted on the south side of the panel support, PV panels (112) are mounted on the east side, and on the west side PV panels (113) are attached, and wherein PV panels are optionally attached to the north side (114) are attached, and where the two narrow sides and the two wide sides of the panel support are connected to each other without any protrusions, and where the openings on the underside (121) and the top side (122) of the panel support are closed off with an air-permeable storm grille, whereby a roof structure consisting of PV panels (111) facing south towards the sun and the north-side panels (115) is placed on the top side of the panel support (100) consists of PV panels (111) facing south towards the sun and panels (115) on the north side, and where the triangular openings (126) on the east and west sides are closed off with an air-permeable storm grille.

2. Free-standing structure according to claim 1, **characterized in that** the pillars (101) and (102) are made of wood, concrete, or steel.

3. Free-standing structure according to claim 1 or 2, **characterized in that** the pillars (101) and (102) are anchored in a concrete foundation.

4. Free-standing structure according to claim 1 or 2, **characterized in that** the pillars (101) and (102) are anchored in a compacted gravel foundation.

5. Free-standing structure according to one or more of claims 1 to 4, **characterized in that** the roof is connected to the panel support (100) without any overhang.

6. Free-standing structure according to one or more of claims 1 to 5, **characterized in that** storm grilles are attached over existing openings in the interior of the panel support (100) so that the wind pressure in the interior of the structure is reduced.

7. Free-standing structure according to one or more of claims 1 to 6, **characterized in that** the wide side is at least twice as long as the narrow side, in particular at least three times or at least four times as long, preferably exactly four times as long.

8. Free-standing structure according to one or more of claims 1 to 7, **characterized in that** the minimum height is 2 meters or 3 meters.

## Revendications

1. Structure autonome sur laquelle sont fixés des panneaux solaires destinés à convertir l'énergie rayonnante du soleil en énergie électrique, la structure étant composée d'un support de panneaux en forme de caisson (100) avec un côté large, en particulier étendu, et un côté étroit, en particulier mince, dont un côté large est incliné vers le sud en direction du soleil avec un angle solaire (105) par rapport à l'horizontale de 70 degrés principalement, et dont l'autre côté large est incliné vers le nord en direction de la couverture neigeuse ou du sol avec un angle solaire (105) de 70 degrés principalement et où le support de panneaux (100) repose sur quatre piliers qui ont une hauteur minimale qui est de préférence supérieure à la hauteur maximale de neige attendue en hiver, et où l'inclinaison des deux piliers sud (101) correspond à l'angle solaire (105) et où l'angle dans la surface parallèle au côté étroit du support de panneaux (100) entre un pilier nord (102) et le pilier sud correspondant (101) est de préférence de 45 degrés, et où les quatre piliers sont ancrés dans une fondation et où des panneaux photovoltaïques (110) sont fixés sur le côté sud du support de panneaux, des panneaux photovoltaïques (112) sont fixés sur le côté est, et des panneaux photovoltaïques (113) sont fixés sur le côté ouest, et où, en option, des panneaux photovoltaïques sont fixés sur le côté nord (114) sont fixés en option, et où les deux côtés étroits et les deux côtés larges du support de panneaux sont reliés entre eux sans dépasser, et où les ouvertures sur la face inférieure (121) et la face supérieure (122) du support de panneaux sont fermées par une grille anti-tempête perméable à l'air, une structure de toit étant installée sur la face supérieure du support de panneaux (100) est surmonté d'une structure de toit composée de panneaux photovoltaïques (111) orientés vers le sud et de panneaux (115) orientés vers le nord , et où les ouvertures triangulaires (126) présentes sur les côtés est et ouest sont fermées par une grille anti-tempête perméable à l'air.

2. Construction indépendante selon la revendication 1, **caractérisée en ce que** les piliers (101) et (102) sont en bois, en béton ou en acier.

3. Construction indépendante selon la revendication 1 ou 2, **caractérisée en ce que** les piliers (101) et (102) sont ancrées dans une fondation en béton.

4. Construction indépendante selon la revendication 1 ou 2, **caractérisée en ce que** les piliers (101) et (102) sont ancrées dans une fondation en gravier compacté.

5. Construction indépendante selon une ou plusieurs des revendications 1 à 4, **caractérisée en ce que** la toiture est reliée au support de panneaux (100) sans débord.

6. Construction indépendante selon une ou plusieurs des revendications 1 à 5, **caractérisée en ce que** des grilles anti-tempête sont installées sur les ouvertures existantes de l'espace intérieur du support de panneaux (100), de manière à réduire la pression du vent à l'intérieur de la construction.

7. Construction indépendante selon une ou plusieurs des revendications 1 à 6, **caractérisée en ce que** le côté large est au moins deux fois plus long que le côté étroit, en particulier au moins trois fois ou au moins quatre fois plus long, de préférence exactement quatre fois plus long.

8. Construction indépendante selon une ou plusieurs des revendications 1 à 7, **caractérisée en ce que** la hauteur minimale est de 2 mètres ou 3 mètres.
